# DEMANDE DE BREVET EUROPEEN

(11) **EP 1 457 387 A1**
(43) Date de publication de la demande: **15.09.2004**
(21) Numéro de dépôt: 04290546.3
(22) Date de dépôt: 01.03.2004
(51) Int. Cl.: B60R 13/08

(54) **Panneau insonorisant pourvu d'un dispositif de fixation à plusieurs logements**

(30) Priorité: 05.03.2003 FR 0302710
(71) Demandeur: Centre d'Etude et de Recherche pour l'Automobile ( CERA), 51100 Reims (FR)
(72) Inventeur: De Vismes, Bertrand, 78000 Versailles (FR); Sares, Laurent, 51100 Reims (FR)
(74) Mandataire: Geismar, Thierry

(57) **Abrégé**

L'invention concerne un panneau (1) comprenant une couche de matériau thermoplastique (2), ledit panneau étant destiné à être fixé à au moins un élément rigide (3) comprenant au moins un organe saillant d'ancrage (6) dudit panneau, ledit panneau comprenant au moins un dispositif de fixation (8) intégré audit panneau. Chaque dispositif de fixation (8) comprend une pluralité de logements (5) disposés de façon contiguë, chacun des logements (5) d'un dispositif de fixation (8) étant agencé pour pouvoir retenir par contact serrant l'organe (6) qui est destiné à être introduit dans ledit dispositif de fixation. L'invention concerne également un procédé de fabrication par moulage d'un tel panneau.

## Description

L'invention concerne un panneau, notamment un panneau insonorisant, ainsi qu'un procédé de fabrication d'un tel panneau.

De tels panneaux sont notamment destinés aux véhicules automobiles, où ils sont utilisés pour isoler l'habitacle de l'environnement extérieur. En particulier, ils peuvent être fixés sur le tablier en tôle du véhicule automobile, pour atténuer le bruit occasionné à l'intérieur de l'habitacle par le moteur ou par le roulage.

Ces panneaux sont actuellement réalisés sous la forme d'une plaque massive en matière plastique de densité élevée, appelée masse lourde, associée à un support faisant office de ressort, tel une couche de mousse ou de feutre. Il est connu de réaliser la masse lourde par moulage d'un matériau élastomère thermoplastique comprenant une charge minérale. Un tel moulage permet entre autres d'incorporer des organes fonctionnels moulés d'une pièce avec la masse lourde. Lorsque le ressort est une couche de mousse, l'association de la masse lourde et du ressort peut être réalisée par surmoulage de la masse lourde par la mousse.

Le panneau constitué par la masse lourde et le ressort favorise, de par sa structure, l'amortissement des vibrations et présente par conséquent des propriétés d'isolation acoustique intéressantes.

Pour fixer le panneau au tablier, il est connu de prévoir, moulés d'une pièce avec la plaque de masse lourde, un ou plusieurs moyens de fixation comprenant chacun un orifice, ou logement, chaque moyen étant associé lors du montage à un organe saillant prévu sur le tablier à cet effet.

Le panneau une fois fixé au tablier d'un véhicule automobile permet d'amortir les vibrations du tablier et par conséquent de réduire le bruit à l'intérieur de l'habitacle.

De par la nature des matériaux utilisés, ces panneaux insonorisants ont un poids élevé et une certaine souplesse qui rendent leur montage sur le tablier d'un véhicule délicat, d'autant plus que les opérateurs effectuant un tel montage travaillent partiellement « en aveugle ».

D'autre part, le positionnement respectif des organes et des orifices ou logements est sujet à des dispersions qui augmentent encore les difficultés à monter le panneau.

Pour remédier à ces inconvénients, l'invention propose notamment un panneau insonorisant comprenant des dispositifs de fixation intégrés qui sont agencés pour faciliter le montage dudit panneau sur un élément rigide tel qu'un tablier de véhicule automobile.

A cet effet, et selon un premier aspect, l'invention propose un panneau comprenant une couche de matériau thermoplastique, ledit panneau étant destiné à être fixé à au moins un élément rigide comprenant au moins un organe saillant d'ancrage dudit panneau, ledit panneau comprenant au moins un dispositif de fixation intégré audit panneau. Chaque dispositif de fixation comprend une pluralité de logements disposés de façon contiguë, chacun des logements d'un dispositif de fixation étant agencé pour pouvoir retenir par contact serrant l'organe qui est destiné à être introduit dans ledit dispositif de fixation.

Selon un deuxième aspect, l'invention propose un procédé de fabrication d'un tel panneau qui prévoit le moulage par injection d'au moins un dispositif de fixation d'une seule pièce avec la couche de matériau thermoplastique.

D'autres objets et avantages de l'invention apparaîtront au cours de la description qui suit, faite en référence aux dessins annexés dans lesquels :
- la figure 1 est une vue schématique en coupe verticale partielle d'un panneau insonorisant pourvu d'un dispositif de fixation du panneau selon un mode de réalisation ;
- la figure 2 est une vue schématique en coupe verticale partielle du panneau insonorisant de la figure 1 fixé sur le tablier d'un véhicule automobile ;
- la figure 3 est une vue schématique de dessus et partielle du dispositif de fixation représenté sur les figures 1 et 2 ;
- la figure 4 est une vue schématique en coupe verticale partielle d'un panneau insonorisant pourvu d'un dispositif de fixation du panneau selon une variante du mode de réalisation, ledit panneau étant fixé sur le tablier d'un véhicule automobile.

Le panneau insonorisant 1 selon l'invention est destiné à être fixé à au moins un élément rigide 3, tel qu'un tablier de véhicule automobile. Ce panneau 1 comprend typiquement une couche de matériau thermoplastique chargé 2 obtenue par un procédé de moulage.

En outre, une couche 4 de mousse de type polyuréthanne ou de textile de type feutre est associée par tout moyen connu sur la face de la couche de matériau thermoplastique 2 destinée à être placée en regard de l'élément rigide.

De façon connue, cet ensemble, dans lequel la couche de matériau thermoplastique joue le rôle de masse lourde et la couche de mousse ou de feutre joue le rôle de ressort, permet d'amortir les vibrations et donc remplit une fonction d'isolation acoustique.

Ce type de panneau est avantageusement utilisé pour isoler l'intérieur de l'habitacle d'un véhicule automobile notamment des bruits du moteur.

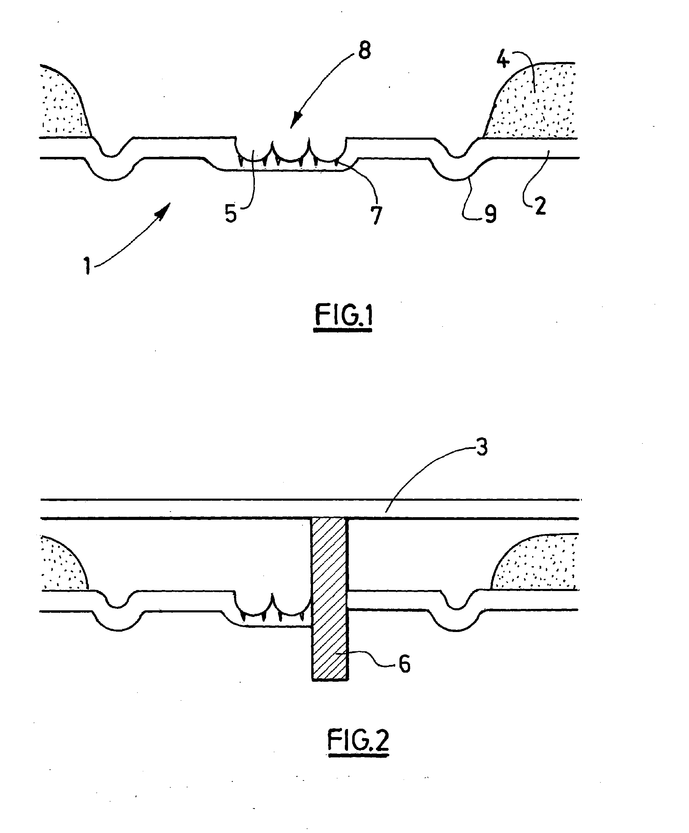

On décrit ci-dessous, en relation avec les figures 1 à 4, un panneau insonorisant 1 pouvant être fixé aisément sur au moins un élément rigide 3 tel qu'un tablier.

Les éléments rigides 3 sur lesquels les panneaux 1 sont destinés à être fixés comprennent des organes d'ancrage 6 répartis de façon discrète. Ces organes d'ancrage sont des éléments saillants, disposés à la surface de l'élément rigide 3, qui sont agencés pour permettre la fixation du panneau 1 sur ces éléments.

Pour permettre sa fixation, le panneau 1 comprend un ou plusieurs dispositifs de fixation 8 coopérant avec des organes d'ancrage 6 de l'élément rigide 3. A cet effet, les dispositifs de fixation 8 sont prévus pour être disposés respectivement en regard des organes 6 avec lesquels ils sont destinés à coopérer.

Selon un mode de réalisation, représenté sur les figures 1 à 4, les dispositifs de fixation 8 sont agencés pour recevoir des organes d'ancrage 6 en forme de picots cylindriques. Afin de prendre en compte les dispersions dimensionnelles dans le positionnement relatif des organes 6 et des dispositifs de fixation 8, lesdits dispositifs comprennent une pluralité de logements 5 juxtaposés les uns à côté des autres de façon concentrique autour d'un logement de référence 5a. Seul le logement 5 situé le plus à l'aplomb de l'organe 6, lors du positionnement du panneau 1 sur l'élément rigide 3 avant fixation, est utilisé pour assurer la fixation du dispositif 8 sur l'organe 6.

Un tel dispositif 8, du fait qu'il garantit le placement d'un logement 5 en regard de l'organe 6 ne requiert pas d'effort de la part de l'opérateur et simplifie considérablement le montage du panneau, et ce d'autant plus que ce montage est réalisé « en aveugle ».

Le mode de réalisation schématisé en figures 1 à 3 prévoit, sous l'effet de la pression exercée pour engager l'organe 6 dans le logement 5 utilisé pour assembler le panneau 1 sur l'élément rigide 3, une perforation du fond dudit logement 5 qui devient alors débouchant. Cette perforation peut être facilitée par une amorce de rupture 7 prévue en fond de logement 5.

Dans ce mode de réalisation, les logements non utilisés ne sont pas perforés, ce qui présente l'avantage de ne pas dégrader les performances d'insonorisation du panneau.

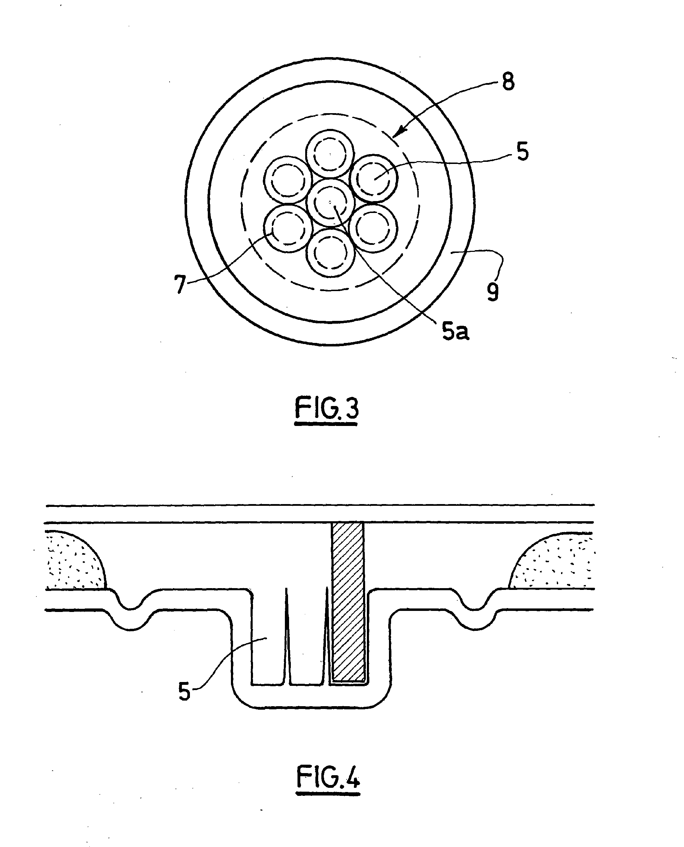

Dans une variante de ce mode de réalisation, représentée en figure 4, la longueur du logement 5 est agencée de façon à éviter la perforation du logement 5 lors du montage, ce qui améliore encore les performances d'insonorisation.

L'utilisation de logements 5, d'ouverture circulaire de diamètre sensiblement égal à celui de l'organe 6, placés de façon concentrique autour d'un logement 5a de référence, permet un rattrapage optimisé des dispersions dimensionnelles. Cette configuration, schématisée en figure 3 correspond à la plus grande densité de logements 5 par unité de surface. Comme schématisé en figures 1 et 2, les logements 5 présentent par exemple une section transversale semi circulaire.

Il peut être prévu autant de logements 5 disposés en cercles concentriques que nécessaire, ceci en fonction des dispersions dimensionnelles à rattraper, de manière à garantir le placement de l'organe 6 en regard d'un logement 5.

La couche de matériau thermoplastique chargé 2 est obtenue par moulage, par exemple par moulage par injection suivi le cas échéant d'une étape de compression qui permet dans le cas d'un matériau fortement chargé de diminuer la pression d'injection.

Le fait de mouler le matériau thermoplastique présente notamment l'avantage de pouvoir contrôler et moduler l'épaisseur de la couche 2 tout en permettant d'intégrer les dispositifs de fixation 8 d'une seule pièce avec le panneau 1.

Dans une variante de ce procédé de réalisation, le moulage du dispositif 8 est réalisé par application d'un poinçon chaud sur une feuille de matériau thermoplastique 2 destinée à être thermoformée. Le moulage du dispositif 8 peut être réalisé simultanément à l'étape de thermoformage, voire après cette étape.

Concernant le montage du panneau 1 sur l'élément rigide 3, le panneau 1 est disposé dans une première étape de sorte que chaque dispositif de fixation 8 soit placé en regard de l'organe d'ancrage 6 avec lequel il doit coopérer. Ainsi, en introduisant, lors d'une deuxième étape, chaque organe 6 dans chaque logement 5 de chaque dispositif 8 le mieux positionné pour le recevoir, le panneau 1 peut être fixé à l'élément rigide 3.

Afin d'affiner le positionnement du logement 5 finalement utilisé, il peut être souhaitable de prévoir des moyens favorisant son placement exactement en regard de l'organe 6 avec lequel il doit coopérer.

Selon une réalisation représentée sur les figures 1 à 4, ces moyens peuvent être formés d'un soufflet circulaire ou oblong concentrique 9 situé à distance du dispositif 8 et autour des logements 5.

Ainsi, lors de la deuxième étape de montage du panneau 1, la présence de ce soufflet 9 permet à l'opérateur de déplacer le logement 5 utilisé autour de son axe de symétrie, et ainsi de le positionner parfaitement en face de l'organe d'ancrage 6 correspondant. L'utilité d'un tel soufflet 9 est accentuée par le fait que le montage est effectué partiellement « en aveugle ».

Dans un exemple particulier, les dispositifs 8 dépourvus de soufflets 9 sont ceux disposés dans la partie centrale du panneau 1. Ainsi, le panneau 1 est d'abord fixé par sa partie centrale, puis les bords sont fixés avec possibilité de rattrapage du jeu entre le positionnement respectivement des logements 5 utilisés et des organes 6.

Pour assurer une fixation fiable du panneau 1 sur l'élément rigide 3 il est nécessaire que les logements 5 retiennent les organes d'ancrage 6 de façon durable.

A cet effet, la paroi interne des logements 5 est agencée pour retenir les organes 6 par contact serrant, de sorte à maintenir le panneau 1 en place, une fois celui-ci fixé à l'élément rigide 3.

Dans un exemple particulier, la couche thermoplastique 2 peut être élastomérique de sorte qu'après introduction en force de l'organe 6 dans le logement 5, un bon contact serrant soit obtenu.

En outre, les matériaux élastomériques sont particulièrement performants dans le cadre d'une utilisation comme isolant acoustique dans des ensembles masse-ressort.

Dans le mode de réalisation représenté, la couche de mousse 4 s'arrête à une certaine distance des dispositifs de fixation 8, de sorte à ne pas les enrober. Cette réalisation permet de faciliter l'introduction des organes 6 dans les logements 5. En variante non représentée, on peut cependant prévoir que les dispositifs de fixation soient au moins partiellement enrobés par ladite couche de mousse.

Selon une réalisation, la couche de matériau thermoplastique comprend entre environ 10 et 50% en poids d'EPDM (éthylène propylène diène monomère), et entre environ 90 et 50% en poids de charge minérale. D'autres additifs peuvent être ajoutés pour conférer des propriétés particulières au matériau (huile,...).

Toutefois, d'autres élastomères thermoplastiques tels que l'EVA ou l'EPM peuvent être utilisés.

La charge minérale peut comprendre du sulfate de baryum, du carbonate de calcium (craie) et/ou de l'hydroxyde de baryum.

## Revendications

1. Panneau (1) comprenant une couche de matériau thermoplastique (2), ledit panneau étant destiné à être fixé à au moins un élément rigide (3) comprenant au moins un organe saillant d'ancrage (6) dudit panneau, ledit panneau comprenant au moins un dispositif de fixation (8) intégré audit panneau, **caractérisé en ce que** chaque dispositif de fixation (8) comprend une pluralité de logements (5) disposés de façon contiguë, chacun des logements (5) d'un dispositif de fixation (8) étant agencé pour pouvoir retenir par contact serrant l'organe (6) qui est destiné à être introduit dans ledit dispositif de fixation.

2. Panneau selon la revendication 1, **caractérisé en ce que** les logements (5) d'un dispositif de fixation (8) sont disposés de façon concentrique autour d'un logement (5a) de référence.

3. Panneau selon la revendication 1 ou 2, **caractérisé en ce que** les logements (5) présentent une ouverture circulaire de diamètre sensiblement égal à celui de l'organe (6) qui est destiné à être introduit à l'intérieur d'eux.

4. Panneau selon l'une quelconque des revendications 1 à 3, **caractérisé en ce que** les logements (5) comprennent des moyens facilitant leur perforation lors de l'introduction de l'organe (6).

5. Panneau selon la revendication 4, **caractérisé en ce que** les moyens facilitant la perforation comprennent une amorce de rupture (7).

6. Panneau selon l'une quelconque des revendications 1 à 3, **caractérisé en ce que** les logements (5) présentent une hauteur agencée pour éviter leur perforation par l'organe (6) lors de son introduction.

7. Panneau selon l'une quelconque des revendications 1 à 6, **caractérisé en ce que** le dispositif de fixation (8) comprend des moyens (9) pour faciliter le placement de l'organe (6) en regard d'un logement (5).

8. Panneau selon la revendication 7, **caractérisé en ce que** les moyens (9) sont formés d'un soufflet circulaire ou oblong qui est prévu autour des logements (5).

9. Panneau selon l'une quelconque des revendications précédentes, **caractérisé en ce que** le matériau plastique est élastomérique.

10. Panneau selon la revendication 9, **caractérisé en ce qu'**il est formé d'une couche de matériau thermoplastique comprenant entre 10 et 50 % en poids d'EPDM et entre 90 et 50% en poids de charge minérale.

11. Panneau selon l'une quelconque des revendications précédentes, **caractérisé en ce qu'**il est associé à une couche de matériau (4) faisant office de ressort, tel une mousse souple ou un feutre, de sorte que le panneau (1) présente des propriétés insonorisantes.

12. Procédé de fabrication d'un panneau selon l'une quelconque des revendications précédentes, **caractérisé en ce qu'**il prévoit le moulage par injection d'au moins un dispositif de fixation (8) d'une seule pièce avec la couche de matériau thermoplastique (2).
